# EUROPEAN PATENT APPLICATION

(11) **EP 4 668 134 A1**
(43) Date of publication of application: **24.12.2025**
(21) Application number: 23922602.0
(22) Date of filing: 13.02.2023
(51) Int. Cl.: G06F 16/90

(54) **DATA PROCESSING DEVICE, METHOD, AND PROGRAM**

(71) Applicant: NTT, Inc., Tokyo 100-8116 (JP)
(72) Inventor: WU, Chao, Musashino-shi, Tokyo 180-8585 (JP); HORIUCHI, Shingo, Musashino-shi, Tokyo 180-8585 (JP); KIKUSHIMA, Hiroaki, Musashino-shi, Tokyo 180-8585 (JP); FUKUDA, Nobukazu, Musashino-shi, Tokyo 180-8585 (JP)
(74) Representative: Nederlandsch Octrooibureau
(86) International application number: PCT/JP2023/004808
(87) International publication number: WO 2024/171261

(57) **Abstract**

A data processing apparatus according to one embodiment has: an input unit that receives an input of information in natural language related to a status when a user who uses a service uses the service; an information supplement unit that supplements the information with information specific to the user about usage of the service; and an extraction unit that extracts a desire related to provision of the service made by the user from the information supplemented by the information supplement unit.

## Description

### Technical Field

Embodiments of the present invention relate to a data processing apparatus, a method, and a program.

### Background Art

Non Patent Literature 1 discloses, for example, a method of autonomously controlling a network and calculation resources according to an intent that is a desire of a user. In the method disclosed in Non Patent Literature 1, in order for a user to express a demand more naturally, an intent is extracted from the user's natural language-based input information, e.g., an interaction with a chatbot, and mapping is set according to a fixed rule.

### Citation List

### Non Patent Literature

Non Patent Literature 1: Arthur S. Jacobs, Ricardo J. Pfitscher, Rafael H. Ribeiro, Ronaldo A. Ferreira, Lisandro Z. Granville, and Sanjay G. Rao. 2019. Deploying Natural Language Intents with Lumi. In Proceedings of the ACM SIGCOMM 2019 Conference Posters and Demos (SIGCOMM Posters and Demos '19). Association for Computing Machinery, New York, NY, USA, 82-84. https://doi.org/10.1145/3342280.3342315

### Summary of Invention

### Technical Problem

In the above-described method of extracting an intent from the user's natural language-based input information using a chatbot, since the intent is extracted using only the user's natural language-based input information, background information (context information) not included in the input information is ignored in extracting the intent. Therefore, an accurate intent may not be extracted from the above input information.

In the above-described method, since mapping is set after a keyword is extracted from the input information, the intent is not correctly extracted when there is an error in the keyword extraction result or when the mapping rule is not set.

In addition, in the above-described method related to the intent extraction, usage conditions or services for each user, a resource status, and the like are not considered, and it is not possible to extract an optimal intent according to the current state of the user or the communication network.

The present invention has been made in view of the above circumstances, and an object thereof is to provide a data processing apparatus, a method, and a program capable of appropriately extracting an intent from input information.

### Solution to Problem

A data processing apparatus according to one aspect of the present invention includes: an input unit that receives an input of information in natural language related to a status when a user who uses a service uses the service; an information supplement unit that supplements the information with information specific to the user about usage of the service; and an extraction unit that extracts a desire related to provision of the service made by the user from the information supplemented by the information supplement unit.

A data processing apparatus according to one aspect of the present invention includes: an input unit that receives an input of information in natural language related to a status when a service is used by a user who uses the service; an information addition unit that adds, to the information, information indicating a current influence on provision of the service to the user; and an extraction unit that extracts a desire related to provision of the service made by the user from the information subjected to the addition by the information addition unit.

A data processing method according to one aspect of the present invention, that is performed by a data processing apparatus, includes: receiving an input of information in natural language related to a status when a user who uses a service uses the service; supplementing the information with information specific to the user about usage of the service; and extracting a desire related to provision of the service made by the user from the supplemented information.

A data processing method according to one aspect of the present invention, that is performed by a data processing apparatus, includes: receiving an input of information in natural language related to a status when a user who uses a service uses the service; adding, to the information, information indicating a current influence on provision of the service to the user; and extracting a desire related to provision of the service made by the user from the information subjected to the addition.

### Advantageous Effects of Invention

According to the present invention, it is possible to appropriately extract an intent from input information.

### Brief Description of Drawings

Fig. 1 is a diagram illustrating an application example of a data processing apparatus according to one embodiment of the present invention.
Fig. 2 is a diagram illustrating a first example of knowledge graphs handled by the data processing apparatus according to one embodiment of the present invention.
Fig. 3 is a diagram illustrating a first example of information handled by the data processing apparatus according to one embodiment of the present invention.
Fig. 4 is a diagram illustrating a second example of the knowledge graphs handled by the data processing apparatus according to one embodiment of the present invention.
Fig. 5 is a diagram illustrating a second example of the information handled by the data processing apparatus according to one embodiment of the present invention.
Fig. 6 is a block diagram illustrating an example of a hardware configuration of the data processing apparatus according to one embodiment of the present invention.

### Description of Embodiments

Hereinafter, one embodiment according to the present invention will be described with reference to the drawings.

In the present embodiment, an intent is extracted by taking into account a variety of information not included in a user's natural language-based input information. The extracted intent includes information items such as an operation such as start or stop, a service type to be requested, service requirements, service provision conditions, and a resource status.

First, in the present embodiment, specific information about service usage by a user, such as conditions for service usage by the user or a place where a service is used, is supplemented to the natural language-based input information.

Second, in the present embodiment, knowledge necessary for appropriately extracting an intent, such as a catalog of service resources, capability, fault information, or the like is added to the input information.

The catalog of service resources shows information indicating a list of services and resources that can be applied to a target system. The capability indicates, for example, a capability of transmitting traffic or processing a load or the like.

In addition, in the present embodiment, the intent is extracted by extracting a keyword from a model in a centralized manner from the input information to which the above-described supplementary or added information is added. Therefore, the intent is prevented from not being correctly extracted when there is an error in the keyword extraction result or when the mapping rule is incomplete.

Therefore, in the present embodiment, the intent can be more accurately extracted by utilizing background information or related knowledge related to the user's intent.

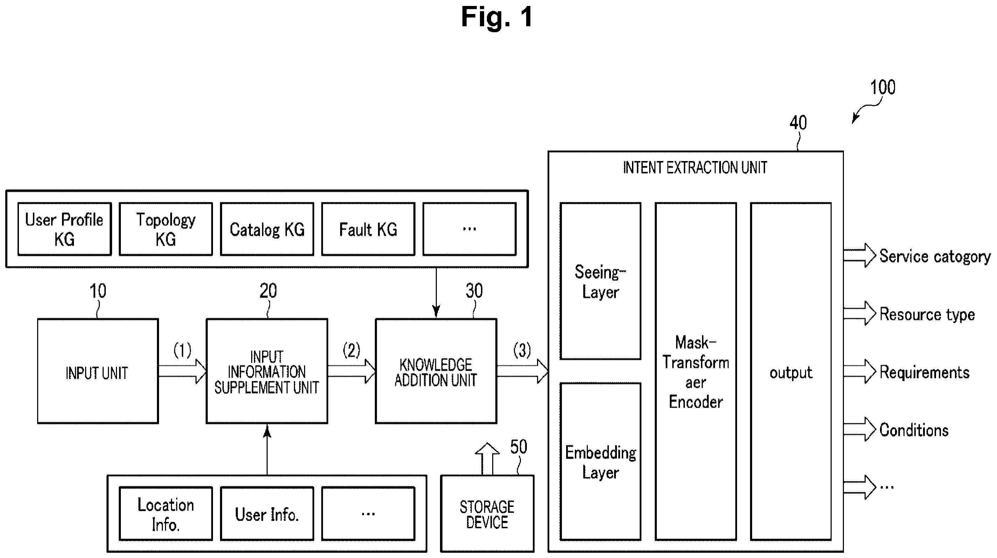

Fig. 1 is a diagram illustrating an application example of a data processing apparatus according to one embodiment of the present invention.

As illustrated in Fig. 1, a data processing apparatus 100 according to one embodiment of the present invention has an input unit 10, an input information supplement unit 20, a knowledge addition unit 30, an intent extraction unit 40, and a storage device 50.

The input unit 10 receives as an input a user's natural language-based input information such as text information provided by a chatbot or the like, for example, "Reconnect the Internet" or "Set up network for flaw detection", and passes the input information to the input information supplement unit 20 (reference sign (1) in Fig. 1).

The input information supplement unit 20 extracts, for example, information on a user's service usage conditions and a place where a service is used, such as "at Location A for user a" or "for flaw detection at Location B for user b" from, for example, a contract database or user's real-time location information, supplements the extraction result to the input information input through the input unit 10, and passes the supplemented input information such as "Reconnect the Internet at Location A for user a" or "Set up network for flaw detection at Location B for user b" to the knowledge addition unit 30 (reference sign (2) in Fig. 1).

The knowledge addition unit 30 adds, to the input information supplemented by the input information supplement unit 20, knowledge necessary for intent extraction from the input information, such as a catalog of service resources, capability, or fault information, as information indicating the current influence on the service provision to a user or information indicating the current status of the service provided to a user, and passes the information to the intent extraction unit 40 (reference sign (3) in Fig. 1).

The intent extraction unit 40 utilizes a language representation model or logic having a function of extracting an intent from the information after supplement by the input information supplement unit 20 and the information after addition by the knowledge addition unit 30, such as bidirectional encoder representation from transformers (BERT) or knowledge-enabled bidirectional encoder representation from transformers (K-BERT), and extracts, from the input information subjected to the supplement by the input information supplement unit 20 and the addition by the knowledge addition unit 30, for example, entities related to a service category, a resource type, requirements, and conditions, that are the content of the intent.

The above-described language representation model or logic can be stored in the storage device 50 or an internal memory of the intent extraction unit 40. In the example illustrated in Fig. 1, the intent extraction unit 40 performs processing using K-BERT including layers of "Seeing Layer", "Embedding Layer", "Mask-Transformer Encoder", and "output" or a model or logic having the same extraction function.

In the present embodiment, the example has been described in which the intent is extracted by the intent extraction unit 40 from the input information subjected to both the supplement by the input information supplement unit 20 and the intent extraction from the information after addition by the knowledge addition unit 30.

However, the present invention is not limited thereto, and the intent may be extracted by the intent extraction unit 40 from the input information that is supplemented by the input information supplement unit 20 but not subjected to the addition by the knowledge addition unit 30 within an allowable range of the accuracy of the intent to be finally extracted. Furthermore, the intent may be extracted by the intent extraction unit 40 from the input information that is subjected to the addition by the knowledge addition unit 30 without being supplemented by the input information supplement unit 20.

In order to use the BERT, supervised pre-training (pre-learning) is required. In addition, the intent extraction unit 40 performs the above-described extraction by using a knowledge-enabled language representation model or logic using a network knowledge graph (hereinafter, simply referred to as a knowledge graph) of knowledge in which a variety of knowledge is systematically connected and represented by a graph structure, without the need to perform pre-training by itself.

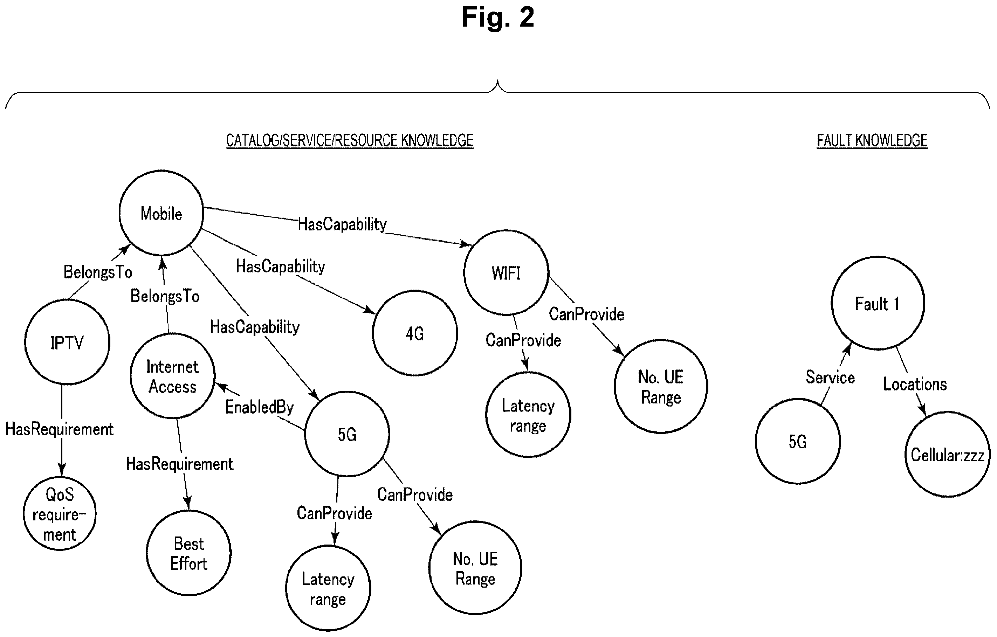

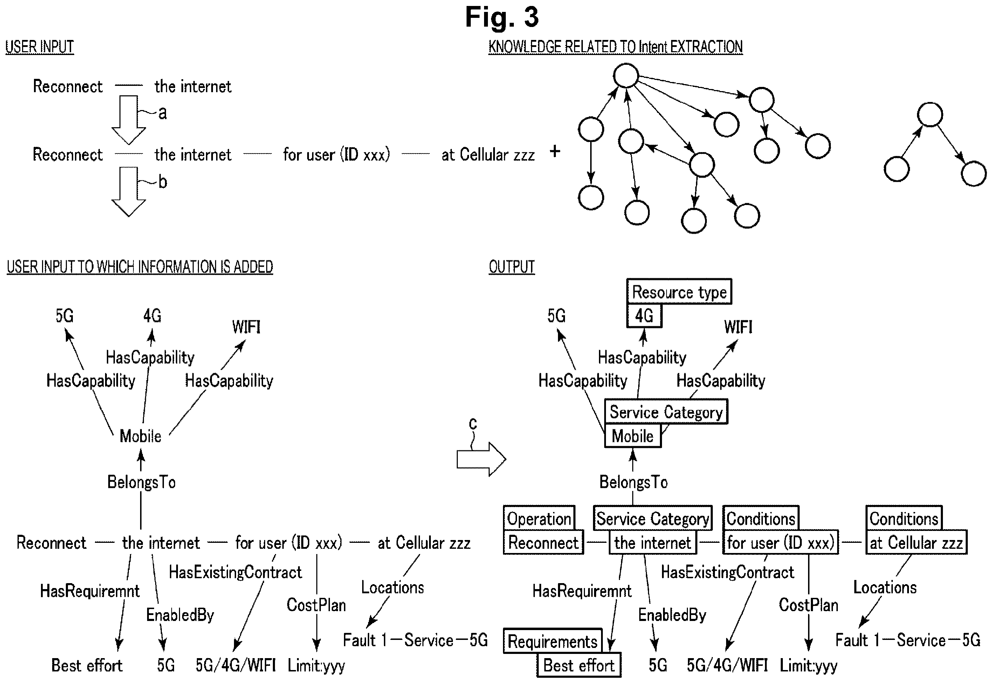

Next, a specific example of the intent extraction when a user inputs natural language-based information using a mobile terminal will be described. Fig. 2 is a diagram illustrating a first example of knowledge graphs handled by the data processing apparatus according to one embodiment of the present invention. Fig. 3 is a diagram illustrating a first example of information handled by the data processing apparatus according to one embodiment of the present invention.

Catalog/service/resource knowledge illustrated in Fig. 2, that is, catalog knowledge, service knowledge, and resource knowledge, are knowledge graphs used by the intent extraction unit 40 in which nodes "Internet Access", "Mobile", "WIFI", "4G", "5G", "Best effort", and the like are connected by any of links "BelongsTo", "HasCapability", "HasRequirement", "EnabledBy", and the like. The knowledge graphs may be stored in the storage device 50 or may be acquired from the outside.

Specifically, in the example illustrated in Fig. 2, the node "Internet Access" is connected to the node "Mobile" by the link "BelongsTo", the node "Internet Access" is connected to the node "Best Effort" by the link "HasRequirement", the node "IPTV" (Internet protocol television) is connected to the node "Mobile" by the link "BelongsTo", and the node "IPTV" is connected to the node "QoS requirement" by the link "HasRequirement".

Further, the node "Mobile" is connected one-to-one to the nodes "WIFI", "4G" (4G communication), and "5G" (5G communication) via the individual link "HasCapability", the node "5G" is connected to the node "Internet Access" via the link "Enabledby", the node "5G" is connected one-to-one to the nodes "No. UE Range" and "Latency range" via the individual link "CanProvide", and the node "WIFI" is connected one-to-one to the nodes "No. UE Range" and "Latency range" via the individual link "CanProvide".

The "Best Effort" and "QoS requirement" indicate quality requirements necessary for service provision. The "Latency range" and "No. UE Range" indicate the range of quality requirements that the resource can provide. The "No. UE Range" can be described as, for example, the maximum number of user equipment (UE) terminals that can be accommodated by one cell of 5G communication.

That is, the knowledge shows that the "Mobile" service, that is a communication service by a mobile terminal, is configured by a service such as "IPTV" or "Internet Access", the quality requirement of "Intent Access" is "Best Effort", the current "Internet Access" is realized by resources of 5G communication, and the "Mobile" service can use resources of 4G communication, WIFI, or the like.

In addition, fault knowledge illustrated in Fig. 2 is a knowledge graph in which nodes "5G", "Fault 1", and "Cellular: zzz" are connected by either of links "Service" and "Location".

Specifically, the node "5G" is connected to the node "Fault 1" via the link "Service", and the node "Fault 1" is connected to the node "Cellular: zzz" via the link "Location".

That is, the fault knowledge shows that a fault or failure currently referred to as "Fault 1" occurs and affects the provision of 5G communication service at the location "Cellular: zzz".

In the example illustrated in Fig. 3, the input unit 10 receives as an input the natural language-based information including entities "Reconnect" and "the internet", and passes the input information to the input information supplement unit 20 (reference sign a in Fig. 3). Next, the input information supplement unit 20 supplements the input information with information including entities "for user (ID xxx)" and "at Cellular zzz", that is specific information about service usage by a user, and passes the supplemented information to the knowledge addition unit 30 (reference sign b in Fig. 3).

Next, the knowledge addition unit 30 collates the input information after supplement with the knowledge graph as illustrated in Fig. 2, specifies, for example, the node "Internet Access" corresponding to the entity "the internet" of the input information illustrated in Fig. 3 from the knowledge graph, and specifies the node "Mobile" connected via the link "BelongsTo" from the above node.

The knowledge addition unit 30 specifies the node "WIFI" connected via the link "HasCapability" from the node "Mobile", the node "4G" connected via the link "HasCapability" from the node "Mobile", the node "5G" connected via the link "HasCapability" from the node "Mobile", the node "Best Effort" connected via the link "HasRequirement" from the node "Internet Access", and the node "5G" connected via the link "EnabledBy" from the node "Internet Access", respectively.

The knowledge addition unit 30 adds the entities based on the specified links and nodes to the input information after supplement under the condition that the node connected to the node "Internet Access" is an entity connected to the entity "the internet" of the input information.

In addition, as illustrated in Fig. 3, similarly for the entity "for user (ID xxx)", the knowledge addition unit 30 can add the entity based on the link and the node to the input information after supplement by, for example, collation with another knowledge graph that can be referred to as "User profile KG".

In addition, as illustrated in Fig. 3, similarly for the entity "at Cellular zzz", the knowledge addition unit 30 can add the entity based on the link and the node to the input information after supplement by collation with the fault knowledge shown in Fig. 2.

Next, the intent extraction unit 40 extracts, as an entity related to an operation that is a type of intent, the entity "Reconnect" connected to the entity "the internet" of the input information (reference sign c in Fig. 3) after addition by the knowledge addition unit 30 by collation with the knowledge graph.

The intent extraction unit 40 extracts the entity "the internet" in Fig. 3, that is, the entity based on the node "Internet Access" of the knowledge graph in Fig. 2, as an entity related to a service category that is a type of intent.

The intent extraction unit 40 extracts the entity "Mobile" in Fig. 3, that is, the entity based on the node "Mobile" connected via the link "BelongsTo" from the node "Internet Access" of the knowledge graph in Fig. 2, as an entity related to the service category.

As a result of considering the fault knowledge illustrated in Fig. 2, the input information after addition by the knowledge addition unit 30 shows that a failure occurs in the resource type corresponding to the entity "5G", that is, 5G communication.

Therefore, the intent extraction unit 40 excludes, from the entities to be extracted related to the resource type, the entity "5G" of the input information after addition by the knowledge addition unit 30 illustrated in Fig. 3, that is, the entity based on the node "5G" connected via the link "HasCapability" from the node "Mobile" of the knowledge graph in Fig. 2 and the node "5G" connected via the link "EnabledBy" from the node "Internet Access" of the knowledge graph in Fig. 2, and extracts the entity "4G" in Fig. 3, that is, the entity based on the node "4G" connected via the link "HasCapability" from the node "Mobile" of the knowledge graph in Fig. 2, as an entity related to the resource type that is a type of intent.

Subsequently, the intent extraction unit 40 extracts the entity "Best effort" of the input information after addition by the knowledge addition unit 30 illustrated in Fig. 3, that is, the entity based on the node "Best Effort" connected via the link "HasRequirement" from the node "Internet Access" of the knowledge graph in Fig. 2, as an entity related to requirements that are a type of intent by collation with the knowledge graph.

In addition, the intent extraction unit 40 extracts the entity "for user (ID xxx)" connected to the entity "the internet" of the input information after addition by the knowledge addition unit 30 and the entity "at Cellular zzz" connected to the entity "for user (ID xxx)", illustrated in Fig. 3, as entities related to conditions that are a type of intent by collation with the knowledge graph.

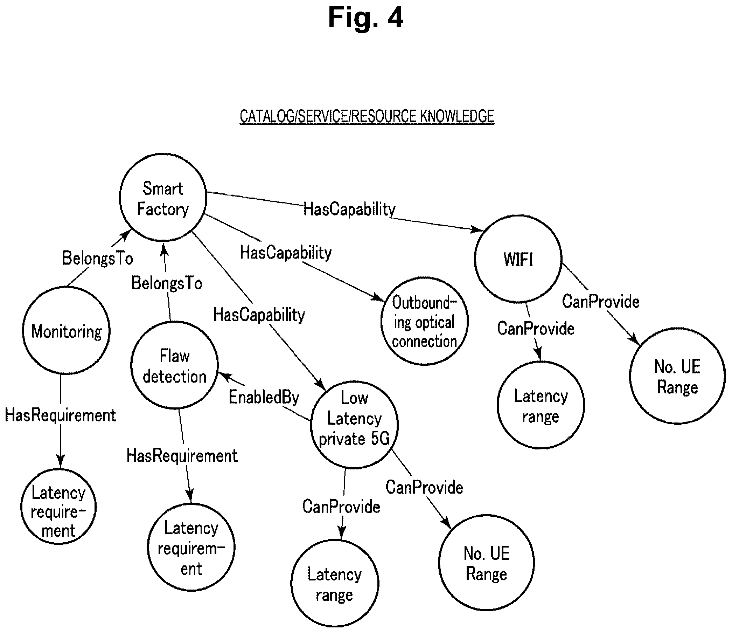

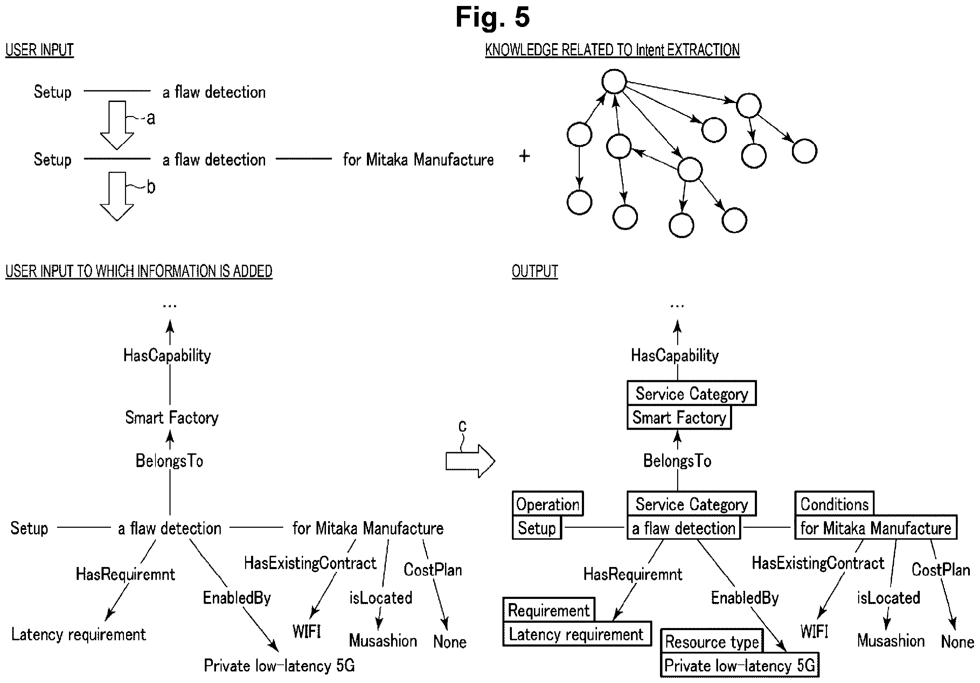

Fig. 4 is a diagram illustrating a second example of the knowledge graphs handled by the data processing apparatus according to one embodiment of the present invention. Fig. 5 is a diagram illustrating a second example of the information handled by the data processing apparatus according to one embodiment of the present invention.

Here, an example when a user inputs information using a smart factory will be described.

Catalog/service/resource knowledge illustrated in Fig. 4 are knowledge graphs in which nodes "Flaw detection", "Smart Factory", "WIFI", "Outbounding optical connection", "Low Latency private 5G", "Latency requirement", and the like are connected by any of links "BelongsTo", "HasCapability", "HasRequirement", "EnabledBy", and the like.

Specifically, the node "Flaw detection" is connected to the node "Smart Factory" by the link "BelongsTo", the node "Flaw detection" is connected to the node "Latency requirement" by the link "HasRequirement", the node "Monitoring" is connected to the node "Smart Factory" by the link "BelongsTo", and the node "Monitoring" is connected to the node "Latency requirement" by the link "HasRequirement".

Further, the node "Smart Factory" is connected one-to-one to the nodes "WIFI", "Outbounding optical connection", and "Low Latency private 5G" via the individual link "HasCapability", the node "Low Latency private 5G" is connected to the node "Flaw detection" via the link "Enabledby", the node "Low Latency private 5G" is connected one-to-one to the nodes "No. UE Range" and "Latency range" via the individual link "CanProvide", and the node "WIFI" is connected one-to-one to the nodes "No. UE Range" and "Latency range" via the individual link "CanProvide".

That is, the knowledge illustrated in Fig. 4 shows that the "Smart Factory" service is configured by a service such as "Monitoring" or "Flaw detection", the quality requirement of "Flaw detection" has "Latency requirement", the current service "Flaw detection" is realized by "Low latency private 5G", and the Smart factory service can use resources of "Outbounding optical connection", WIFI, or the like.

In the example illustrated in Fig. 5, the input unit 10 receives as an input the information including entities "Setup" and "a flaw detection", and passes the input information to the input information supplement unit 20 (reference sign a in Fig. 5). Next, the input information supplement unit 20 supplements the input information with information including the entity "for Mitaka Manufacture", and passes the supplemented information to the knowledge addition unit 30 (reference sign b in Fig. 5).

Next, the knowledge addition unit 30 collates the input information after supplement with the knowledge graph as illustrated in Fig. 4, specifies, for example, the node "Flaw detection" corresponding to the entity "a flaw detection" of the input information illustrated in Fig. 5 from the knowledge graph, and specifies the node "Smart Factory" connected via the link "BelongsTo" from the above node.

The knowledge addition unit 30 specifies the node "WIFI" connected via the link "HasCapability" from the node "Smart Factory", the node "Outbounding optical connection" connected via the link "HasCapability" from the node "Smart Factory", the node "Low Latency private 5G" connected via the link "HasCapability" from the node "Smart Factory", the node "Latency requirement" connected via the link "HasRequirement" from the node "Flaw detection", and the node "Low Latency private 5G" connected via the link "EnabledBy" from the node "Flaw detection", respectively.

The knowledge addition unit 30 adds the entities based on the specified links and nodes to the input information after supplement under the condition that the node connected to the node "Flaw detection" is an entity connected to the entity "a flaw detection" of the input information.

In addition, similarly for the entity "for Mitaka Manufacture" of the input information, the knowledge addition unit 30 can add the links and nodes to the input information after supplement by collation with various knowledge graphs including other knowledge graphs (not illustrated).

Next, the intent extraction unit 40 extracts, as an entity related to an operation that is a type of intent, the entity "Setup" connected to the entity "a flaw detection" of the input information (reference sign c in Fig. 5) after addition by the knowledge addition unit 30 by collation with the knowledge graph.

The intent extraction unit 40 extracts the entity "a flaw detection" in Fig. 5, that is, the entity based on the node "Flaw detection" of the knowledge graph in Fig. 4, as an entity related to a service category that is a type of intent by collation with the knowledge graph.

The intent extraction unit 40 extracts the entity "Smart Factory" in Fig. 5, that is, the entity based on the node "Smart Factory" connected via the link "BelongsTo" from the node "Flaw detection" of the knowledge graph in Fig. 4, as an entity related to the service category.

Subsequently, the intent extraction unit 40 extracts the entity "Latency requirement" of the input information after addition by the knowledge addition unit 30 illustrated in Fig. 5, that is, the entity based on the node "Latency requirement" connected via the link "HasRequirement" from the node "Flaw detection" of the knowledge graph in Fig. 4, as an entity related to requirements that are a type of intent.

The intent extraction unit 40 extracts the entity "Private low-latency 5G" (Low Latency private 5G) in Fig. 5, that is, the entity based on the node "Low Latency private 5G" connected via the link "EnabledBy" from the node "Flaw detection" of the knowledge graph in Fig. 4, as an entity related to a resource type that is a type of intent.

In addition, the intent extraction unit 40 extracts, as an entity related to conditions that are a type of intent, the entity "for Mitaka Manufacture" connected to the entity "Flaw detection" of the input information after addition by the knowledge addition unit 30 illustrated in Fig. 5 by collation with the knowledge graph.

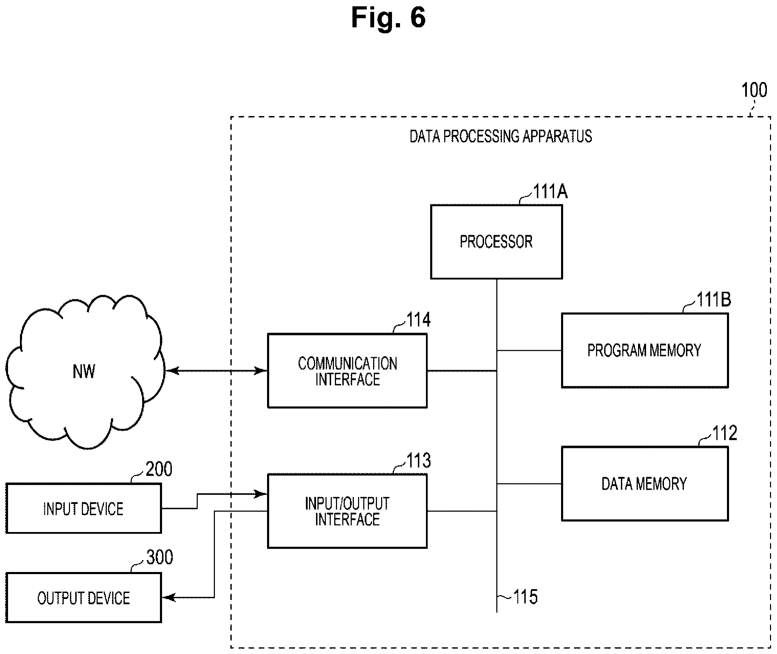

Fig. 6 is a block diagram illustrating an example of a hardware configuration of the data processing apparatus 100 according to one embodiment of the present invention.

In the example illustrated in Fig. 6, the data processing apparatus 100 according to the embodiment is composed of, for example, a server computer or a personal computer, and has a hardware processor 111A such as a CPU. Then, a program memory 111B, a data memory 112, an input/output interface 113, and a communication interface 114 are connected to the hardware processor 111A via a bus 115.

The communication interface 114 includes, for example, one or more wireless communication interface units and enables transmission and reception of information to and from a communication network NW. As a wireless interface, for example, an interface is used in which a low-power wireless data communication standard such as a wireless local area network (LAN) is adopted.

The input/output interface 113 is connected to an input device 200 and an output device 300 that are attached to the data processing apparatus 100 and are used by a user or the like.

The input/output interface 113 performs processing of retrieving operation data input by the user or the like through the input device 200 such as a keyboard, a touch panel, a touchpad, or a mouse, and outputting output data to the output device 300 including a display device using liquid crystal or organic electro luminescence (EL) to display the output data. Note that, as the input device 200 and the output device 300, devices built in the data processing apparatus 100 may be used, or an input device and an output device of another information terminal that can communicate with the data processing apparatus 100 via the network NW may be used.

The program memory 111B is used as a non-transitory tangible storage medium, for example, as a combination of a non-volatile memory on which writing and reading can be performed as necessary, such as a hard disk drive (HDD) or a solid state drive (SSD), and a non-volatile memory such as a read only memory (ROM), and stores programs necessary for executing various types of control processing and the like according to one embodiment.

The data memory 112 is used as a tangible storage medium, for example, as a combination of the above non-volatile memory and a volatile memory such as a random access memory (RAM), and is used to store various data acquired and created in the course of performing various types of processing.

The data processing apparatus 100 according to one embodiment of the present invention can be configured as a data processing apparatus that has a processing functional unit using software. The processing functional unit corresponds to the input unit 10, the input information supplement unit 20, the knowledge addition unit 30, and the intent extraction unit 40 in Fig. 1.

The storage device 50 used as a work memory or the like by the data processing apparatus 100 can be configured by using the data memory 112 illustrated in Fig. 6. However, these configured storage areas are not essential in the data processing apparatus 100, and may be areas provided, for example, in an external storage medium such as a universal serial bus (USB) memory or a storage device such as a database server provided in a cloud.

The processing functional unit can be realized by causing the hardware processor 111A to read and execute a program stored in the program memory 111B. Note that the processing functional unit may be realized in other various forms including an integrated circuit such as an application specific integrated circuit (ASIC) or a field'-programmable gate array (FPGA).

Moreover, the method described in each embodiment can be stored as a program (software means) that can be executed by a computing machine (computer), for example, in a recording medium such as a magnetic disk (Floppy (registered trademark) disk, a hard disk, or the like), an optical disc (a CD-ROM, a DVD, a MO, or the like), or a semiconductor memory (a ROM, a RAM, a flash memory, or the like), and can be distributed by being transmitted through a communication medium. Note that the programs stored in the medium also include a setting program for configuring, in the computing machine, software means (including not only an execution program but also a table and a data structure) to be executed by the computing machine. The computing machine that realizes the present apparatus executes the above-described processing by reading the programs recorded in the recording medium, constructing the software means by the setting program as needed, and controlling the operation by the software means. Note that the recording medium in the present specification is not limited to a recording medium for distribution, and includes a storage medium such as a magnetic disk or a semiconductor memory provided inside the computing machine or in a device connected via a network.

Note that the present invention is not limited to the above embodiments, and various modifications can be made in the implementation stage without departing from the gist of the present invention. In addition, the embodiments may be implemented in appropriate combination, and in this case, a combined effect can be obtained. Furthermore, the above embodiments include various inventions, and various inventions can be extracted by combinations selected from a plurality of disclosed components. For example, in a case where the problems can be solved and the effects can be obtained even if some components are deleted from all the components described in the embodiment, a configuration from which the components are deleted can be extracted as an invention.

### Reference Signs List

- 100: Data processing apparatus
- 10: Input unit
- 20: Input information supplement unit
- 30: Knowledge addition unit
- 40: Intent extraction unit
- 50: Storage device

## Claims

1. A data processing apparatus comprising:
an input unit that receives an input of information in natural language related to a status when a user who uses a service uses the service;
an information supplement unit that supplements the information with information specific to the user about usage of the service; and
an extraction unit that extracts a desire related to provision of the service made by the user from the information supplemented by the information supplement unit.

2. A data processing apparatus comprising:
an input unit that receives an input of information in natural language related to a status when a user who uses a service uses the service;
an information addition unit that adds, to the information, information indicating a current influence on provision of the service to the user; and
an extraction unit that extracts a desire related to provision of the service made by the user from the information subjected to the addition by the information addition unit.

3. The data processing apparatus according to claim 1,
wherein the extraction unit extracts, on the basis of a model that is used to extract the desire related to provision of the service made by the user from the information supplemented by the information supplement unit, the desire related to provision of the service made by the user from the information supplemented by the information supplement unit.

4. The data processing apparatus according to claim 2,
wherein the extraction unit extracts, on the basis of a model that is used to extract the desire related to provision of the service made by the user from the information subjected to the addition by the information addition unit, the desire related to provision of the service made by the user from the information subjected to the addition by the information addition unit.

5. A data processing method that is performed by a data processing apparatus, the method comprising:
receiving an input of information in natural language related to a status when a user who uses a service uses the service;
supplementing the information with information specific to the user about usage of the service; and
extracting a desire related to provision of the service made by the user from the supplemented information.

6. A data processing method that is performed by a data processing apparatus, the method comprising:
receiving an input of information in natural language related to a status when a user who uses a service uses the service;
adding, to the information, information indicating a current influence on provision of the service to the user; and
extracting a desire related to provision of the service made by the user from the information subjected to the addition.

7. The data processing method according to claim 5,
wherein the extracting includes extracting, on the basis of a model that is used to extract the desire related to provision of the service made by the user from the supplemented information, the desire related to provision of the service made by the user from the supplemented information.

8. A data processing program for causing a processor to function as each of the units of the data processing apparatus according to any one of claims 1 to 4.
